# EUROPÄISCHE PATENTSCHRIFT

(11) **EP 2 247 657 B1**
(45) Veröffentlichungstag und Bekanntmachung des Hinweises auf die Patenterteilung: **28.12.2011**
(21) Anmeldenummer: 09713169.2
(22) Anmeldetag: 19.02.2009
(51) Int. Cl.: C08K 5/00, C08K 5/29

(54) **HALOGENFREI FLAMMGESCHÜTZTES TPU**
HALOGEN-FREE FLAME-RETARDANT TPU
TPU IGNIFUGÉ SANS HALOGÈNES

(30) Priorität: 21.02.2008 EP 08151766
(43) Veröffentlichungstag der Anmeldung: 10.11.2010
(73) Patentinhaber: BASF SE, 67056 Ludwigshafen (DE)
(72) Erfinder: HENZE, Oliver, Steffen, 49401 Damme (DE); HANSEN, Marc, 27249 Mellinghausen (DE); HACKMANN, Katja, 49393 Lohne (DE); MEIER, Dietmar, 32351 Stemwede-Oppendorf (DE); BECKMANN, Christian, 49328 Melle (DE); MÜHREN, Oliver, 49080 Osnabrück (DE)
(86) Internationale Anmeldenummer: PCT/EP2009/051980
(87) Internationale Veröffentlichungsnummer: WO 2009/103765

(56) Entgegenhaltungen:
- EP-A- 0 922 719
- EP-A- 1 835 068
- WO-A-01/06163
- WO-A-2006/134138

## Beschreibung

Die vorliegende Erfindung betrifft eine flammgeschützte Mischung enthaltend wenigstens ein Polyurethan, wenigstens ein Flammschutzmittel und wenigstens ein vernetzend wirkendes Reagenz, wobei das wenigstens eine vernetzend wirkende Reagenz wenigstens ein Isocyanat ist, das in wenigstens einem Polyurethan gelöst ist, ein Verfahren zur Herstellung eines flammgeschützten Polyurethans durch Mischen wenigstens eines Polyurethans, wenigstens eines Flammschutzmittels und wenigstens eines vernetzend wirkenden Reagenzes, wobei das wenigstens eine vernetzend wirkende Reagenz wenigstens ein Isocyanat ist, das in wenigstens einem Polyurethan gelöst ist, ein flammgeschütztes Polyurethan, herstellbar nach dem genannten Verfahren und die Verwendung einer Lösung wenigstens eines Isocyanates in wenigstens einem Polyurethan bei der Herstellung eines flammgeschützten Polyurethans.

Flammgeschützte, thermoplastische Polyurethane und Verfahren zu deren Herstellung sind aus dem Stand der Technik bereits bekannt. US 2003/0166749 A1 offenbart ein flammgeschütztes, thermoplastisches Polyurethan, welches Melamincyanurat als Flammschutzmittel enthält, und dessen mechanische Eigenschaften durch Zugabe wenigstens einer vernetzend wirkenden Komponente in einer Menge von höchstens 2 Gew.-% verbessert werden. Als vernetzend wirkende Komponenten werden beispielsweise Trimethylolpropan, Pentaerythrol, Amine, 3-Isocyanato-methyl-3,5,5-trimethylcyclo-hexylisocyanat und ähnliche offenbart. Des Weiteren offenbart US 2003/0166749 A1 ein Verfahren zur Herstellung eines flammgeschützten, thermoplastischen Polyurethans durch Vermischen der genannten Komponenten durch dem Fachmann bekannte Verfahren, beispielsweise Compoundierung. Das genannte Dokument offenbart nicht, dass das vernetzend wirkende Reagenz, beispielsweise ein Diisocyanat als konzentrierte Lösung in wenigstens einem Polyurethan zugegeben werden soll.

DE 103 43 121 A1 offenbart thermoplastische Polyurethane, die Metallhydroxide als Flammschutzmittel enthalten. Diese thermoplastischen Polyurethane zeichnen sich durch ein besonders hohes Molekulargewicht von wenigstens 60.000 g/mol aus. Eine Quervernetzung der thermoplastischen Polyurethane wird in dieser Schrift nicht beschrieben.

WO 2006/121549 A1 offenbart thermoplastische Polyurethane, die halogenfreie Flammschutzmittel enthalten. Die Flammschutzmittel gemäß WO 2006/121549 A1 umfassen eine organische Phosphinat-Komponente, eine organische Phosphat-Komponente und einen mehrwertigen Alkohol. Die Flammschutzmittel werden gemäß der genannten Schrift durch dem Fachmann bekannte Verfahren, beispielsweise Compoundierung, vermischt. WO 2006/121549 offenbart nicht, dass flammgeschützte, thermoplastische Polyurethane erhalten werden können, indem neben den Flammschutzmitteln quervernetzende Reagenzien zugegeben werden.

EP 0 617 079 A2 offenbart selbst verlöschende, thermoplastische Polyurethane sowie ein Verfahren zu ihrer Herstellung. Als Flammschutzmittel werden ein oder mehrere organische Phosphate und/oder ein oder mehrere organische Phosphonate, insbesondere in Mischung mit Melaminderivaten, eingesetzt. Des Weiteren können in der Mischung gemäß EP 0 617 079 A2 Hilfs- und/oder Zusatzstoffe zugegeben werden, beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Verstärkungsmittel. EP 0 617 079 A2 offenbart jedoch nicht, dass vernetzend wirkende Reagenzien neben den Flammschutzmitteln in dem thermoplastischen Polyurethan vorliegen sollen.

WO 2006/134138 A1 offenbart ein thermoplastisches Polyurethan, welches 20 bis 70 Gew.-% Isocyanat gelöst in dem thermoplastischen Polyurethan enthält. WO 2006/134138 A1 offenbart jedoch nicht die Verwendung dieses thermoplastischen Polyurethans zur Herstellung eines flammgeschützten TPU.

In den Verfahren gemäß dem Stand der Technik werden flammgeschützte, thermoplastische Polyurethane erhalten, wobei ein genügend hoher Flammschutz nur bei einem hohen Füllgrad bezüglich der Flammschutzmittel erreicht werden kann. Besonders im Fall halogenfreier Verbindungen sind hohe Füllgrade notwendig, um einen ausreichenden Flammschutz zu gewährleisten. Übliche Flammschutzmittel sind Melamin- und Phosphorverbindungen sowie Metallhydroxide, welche, um einen genügend hohen Flammschutz zu erzielen, zu Anteilen von 20 bis 60 Gew.-% zugefügt werden müssen.

Nachteilig an einem derart hohen Additivanteil ist ein Abfall der mechanischen Eigenschaften der thermoplastischen Polyurethan-Compounds, was eine entsprechende Nutzung im Markt verhindert. Zum einen ist der hohe Füllstoffanteil für die Verschlechterung der mechanischen Eigenschaften verantwortlich, zum anderen bewirkt der Zusatz bestimmter Materialien bei der Verarbeitung auch einen Molmassenabbau, und damit verschlechterte mechanische Eigenschaften.

Aufgabe der vorliegenden Erfindung ist es, ein flammgeschütztes, thermoplastisches Polyurethan und ein Verfahren zu dessen Herstellung bereitzustellen, wobei das erhaltene thermoplastische Polyurethan die gleichen guten mechanischen Eigenschaften aufweisen soll, die es in Abwesenheit der Flammschutzmittel aufweist. Eine weitere Aufgabe ist es, ein einfaches Verfahren bereitzustellen, mit dem die thermoplastischen Polyurethane hergestellt werden können.

Eine weitere Aufgabe war es, Materialien mit guten mechanischen Eigenschaften, gutem Flammschutz und einem hohen Temperaturindex nach DIN EN ISO 2578 herzustellen.

Diese Aufgaben werden gelöst durch eine flammgeschützte Mischung enthaltend
(A) wenigstens ein Polyurethan als Komponente A,
(B) wenigstens ein Flammschutzmittel ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, Metallhydroxiden, organischen Phosphinat-Verbindungen, organischen Phosphat-Verbindungen, mehrwertigen Alkoholen, Melamin-Verbindungen, chloriertem Polyethylen und Mischungen davon, als Komponente B und
(C) wenigstens ein vernetzend wirkendes Reagenz als Komponente C,
wobei das wenigstens eine vernetzend wirkende Reagenz wenigstens ein Isocyanat ist, das in wenigstens einem Polyurethan gelöst ist.

Des Weiteren werden die Aufgaben gelöst durch ein Verfahren zur Herstellung eines flammgeschützten Polyurethans durch Mischen
(A) wenigstens eines Polyurethans als Komponente A,
(B) wenigstens ein Flammschutzmittel ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, Metallhydroxiden, organischen Phosphinat-Verbindungen, organischen Phosphat-Verbindungen, mehrwertigen Alkoholen, Melamin-Derivaten, chloriertem Polyethylen und Mischungen davon, als Komponente B und
(C) wenigstens eines vernetzend wirkenden Reagenzes als Komponente C,
wobei das wenigstens eine vernetzend wirkende Reagenz ein Isocyanat ist, das in wenigstens einem Polyurethan gelöst ist.

Die Aufgaben werden auch gelöst durch die Verwendung einer Lösung von wenigstens einem Isocyanat in wenigstens einem Polyurethan bei der Herstellung von flammgeschützten Polyurethanen.

### Komponente A:

Die erfindungsgemäße Mischung enthält als Komponente A wenigstens ein Polyurethan.

Die in der erfindungsgemäßen Mischung als Komponente A einsetzbaren Polyurethane, bevorzugt thermoplastische Polyurethane, können im Allgemeinen durch Umsetzung von
a) organischen und/oder modifizierten organischen Diisocyanaten mit
b) höhermolekularen, insbesondere im wesentlichen difunktionellen, Polyhydroxylverbindungen und gegebenenfalls
c) Kettenverlängerungsmitteln
erhalten werden.

Die thermoplastischen Polyurethane werden im Rahmen dieser Erfindung auch kurz TPU genannt. Es handelt sich hierbei um die an sich bekannten, im Wesentlichen linearen, thermoplastisch verarbeitbaren Polyurethane. Für die erfindungsgemäße Mischung eignen sich prinzipiell alle an sich bekannten TPU, die nach üblichen Verfahren hergestellt werden können. Bevorzugt werden Polyether-TPU als Komponente A eingesetzt.

Zu den erfindungsgemäßen TPU und ihren Aufbaukomponenten a) bis c) ist im Einzelnen folgendes auszuführen:
Als organische und/oder modifizierte organische Diisocyanate kommen aliphatische, cycloaliphatische oder vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1 ,5, 2-Ethyl-butylen-diisocyanat-1 ,4 oder Mischungen aus mindestens zwei der genannten aliphatischen Diisocyanate; cycloaliphatische Diisocyanate, wie Isophoron-diisocyanat, 1,4-Cyclohexan-diisocyanat, 1-Methyl-2,4- oder -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische; und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanatodiphenylethan-1,2, vorteilhafterweise solche mit einem 4,4'-Diisocyanato-diphenylethan-1,2-Gehalt von mindestens 95 Gew.-%, und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.-% und insbesondere im Wesentlichen reines 4,4'-Diphenylmethan-diisocyanat.

Die organischen Diisocyanate können gegebenenfalls in untergeordneten Mengen, z.B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Menge jedoch so begrenzt werden muss, dass noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so dass eine zu weit gehende chemische Vernetzung des Polyurethans vermieden wird. Beispiele für mehr als difunktionelle Isocyanate sind Mischungen aus Diphenylmethandiisocyanaten und Polyphenylpolymethylen-polyisocyanaten, sog. Roh-MDI, sowie flüssige, mit Isocyanurat-, Harnstoff-, Biuret-, Allophanat-, Urethan-und/oder Carbodiimidgruppen modifizierte 4,4'- und/oder 2,4'-Diphenylmethan-diisocyanate.

Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

Als höhermolekulare Polyhydroxylverbindungen mit Molekulargewichten von 500 bis 8000 g/mol eignen sich Polyesterdiole und insbesondere Polyetherdiole. Eingesetzt wird beispielsweise Polybutadiendiol, mit dem auch gute Ergebnisse bei der Herstellung von vernetzbaren TPU erzielt werden. In Betracht kommen daneben auch andere hydroxylgruppenhaltige Polymere mit Ether- oder Estergruppen in der Polymerkette, beispielsweise Polyacetale, wie Polyoxymethylene, und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen sollten zumindest überwiegend linear sein und müssen im Sinne der Isocyanatreaktion im Wesentlichen difunktionell aufgebaut sein. Die genannten Polyhydroxylverbindungen können als Einzelkomponenten oder in Form von Mischungen zur Anwendung kommen.

Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit Lewis-Säuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsaure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans.

Die im Wesentlichen linearen Polyetherole besitzen üblicherweise Molekulargewichte von 500 bis 8000 g/mol, vorzugsweise 600 bis 6000 g/mol und insbesondere 800 bis 3500 g/mol, wobei die Polyoxytetramethylenglykole bevorzugt Molekulargewichte von 500 bis 2800 g/mol aufweisen. Sie können sowohl einzeln als auch in Form von Mischungen untereinander zur Anwendung kommen.

Geeignete Polyesterdiole können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Glutarsäure, Adipinsaure, Korksäure, Azelainsäure und Sebacinsäure, und aromatische Dicarbonsäuren, wie Phthalsäure, Isophthalsäure und Terephthalsäure.

Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die Diole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6; Kondensationsprodukte von α-Hydroxycarbonsäuren, beispielsweise α-Hydroxycapronsäure, und vorzugsweise Polymerisationsprodukte von Lactonen, beispielsweise gegebenenfalls substituiertem α -Caprolacton.

Als Polyesterdiole vorzugsweise verwendet werden Ethandiolpolyadipate, 1,4-Butandiol-polyadipate, Ethandiol-1,4-butandiol-polyadipate, 1,6-Hexandiolneopentylglykol-polyadipate, 1,6-Hexandiol-1,4-butan-diol-polyadipate und Polycaprolactone.

Die Polyesterdiole besitzen in der Regel Molekulargewichte von 500 bis 6000 g/mol, vorzugsweise von 800 bis 3500 g/mol.

Als Kettenverlängerungsmittel mit Molekulargewichten im Allgemeinen von 60 bis 400 g/mol, vorzugsweise 60 bis 300 g/mol, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oderbutandiol-1,4 und Hydroxyalkylenether des Hydrochinons, wie z.B. 1,4-Di-(3-hydroxyethyl)-hydrochinon sowie Polytetramethylenglykole mit Molekulargewichten von 162 bis 378 g/mol.

Zur Einstellung von Härte und Schmelzindex der TPU können die eingesetzten Mengen der Aufbaukomponenten (b) und (c) in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren TPU, z.B. solchen mit einer Härte Shore A von kleiner als 95, vorzugsweise von 95 bis 75 Shore A, können beispielsweise die im Wesentlichen difunktionellen Polyhydroxylverbindungen (b) und Diole (c) vorteilhafterweise in Molverhältnissen von 1:1 bis 1:5, vorzugsweise 1:1,5 bis 1:4,5 verwendet werden, so dass die resultierenden Mischungen aus (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b) : (c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Komponente A liegt in der erfindungsgemäßen Mischung im Allgemeinen in einer Menge von 19 bis 89 Gew.-%, bevorzugt in einer Menge von 29 bis 79 Gew.-%, besonders bevorzugt 39 bis 69 Gew.-% vor, jeweils bezogen auf die gesamte Mischung.

### Komponente B:

Des Weiteren enthält die erfindungsgemäße, flammgeschützte Mischung wenigstens ein Flammschutzmittel ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, beispielsweise ZnO, B₂O₃, Fe₂O₃, CaO, SiO₂ oder Mischungen davon, Metallhydroxiden, beispielsweise Mg(OH)₂, Al(OH)₃ oder Mischungen davon, organischen Phosphinat-Verbindungen, organischen Phosphat-Verbindungen, beispielsweise Triester der Phosphorsäure, beispielsweise Trialkylphosphate, oligomere Phosphorsäureester bzw. Phosphonsäureester, cyclische Phosphonate, beispielsweise solche, die sich von Pentaerythrit oder Neopentylglycol ableiten, mehrwertigen Alkoholen, Melamin-Verbindungen, beispielsweise Melamin, Melamin-Phosphat, Melamincyanurat, Melaminborat, andere Melamin-Derivate, chloriertem Polyethylen, gegebenenfalls mit Antimon-(II)-oxid als Synergist, und Mischungen davon, als Komponente B.

Die Phosphorsäureester können alleine oder in Mischungen untereinander oder in Mischungen mit Phosphonsäureestern eingesetzt werden. Üblicherweise werden jedoch Phosphorsäureester oder Phosphonsäureester eingesetzt. In einer besonders geeigneten Flammschutzkombination werden die Phosphorsäureester und/oder Phosphonsäureester in Mischungen zusammen mit einem oder mehreren Melaminderivaten für das TPU eingesetzt, wobei dann das Gewichtsverhältnis von Phosphat und Phosphonat zu Melaminderivat vorzugsweise im Bereich von 5 : 1 bis 1 : 5 liegt. Als Melaminderivate kommen dabei vorzugsweise die oben genannten in Frage.

In einer besonders bevorzugten Ausführungsform ist das Flammschutzmittel ausgewählt aus der Gruppe bestehend aus Melamin- und Phosphor-Verbindungen, beispielsweise Melamincyanurat bzw. Phosphorsäureester, Metallhydroxiden, besonders bevorzugt Mg(OH)₂, und Mischung davon.

In der flammgeschützten Mischung liegt Komponente B im Allgemeinen in einem Anteil von 10 bis 80 Gew.-%, bevorzugt 20 bis 70 Gew.-%, insbesondere bevorzugt 30 bis 60 Gew.-%, jeweils bezogen auf die gesamte Mischung, vor.

### Komponente C:

In der erfindungsgemäßen, flammgeschützten Mischung liegt als Komponente C wenigstens ein vernetzend wirkendes Reagenz vor, wobei dieses wenigstens ein Isocyanat ist, das in wenigstens einem Polyurethan gelöst ist.

In einer bevorzugten Ausführungsform wird als Komponente C in der erfindungsgemäßen, flammgeschützten Mischung ein thermoplastisches Polyurethan eingesetzt, enthaltend 20 bis 70 Gew.-%, bevorzugt 25 bis 70 Gew.-%, insbesondere bevorzugt 30 bis 60 Gew.-%, ganz besonders bevorzugt 35 bis 60 Gew.-%, Isocyanat gelöst in dem thermoplastischen Polyurethan, bezogen auf das Gesamtgewicht des thermoplastischen Polyurethans (Komponente (C)).

In der erfindungsgemäßen Komponente C liegt wenigstens ein Isocyanat gelöst in wenigstens einem Polyurethan, bevorzugt wenigstens einem thermoplastischen Polyurethan (TPU), besonders bevorzugt in der Weichphase des thermoplastischen Polyurethans, vor. Eine Reaktion des Isocyanates mit dem TPU und damit Abbau oder Vernetzung des TPU kann insbesondere dadurch vermieden werden, dass die Temperatur bei der Einarbeitung ausreichend niedrig gewählt wird. Üblicherweise ändert sich das Molekulargewicht des TPU bei der Einarbeitung der Isocyanate nicht oder nur sehr geringfügig. Andererseits ist es bevorzugt, dass das thermoplastische Polyurethan bei der Einarbeitung des Isocyanates geschmolzen vorliegt, um eine möglichst hohe Konzentration von Isocyanat in dem TPU möglichst schnell erreichen zu können. Bevorzugt wird das erfindungsgemäße thermoplastische Polyurethan enthaltend Isocyanat bis zur Verarbeitung bei einer Temperatur kleiner als 40°C gelagert.

Komponente C der erfindungsgemäßen Mischung weist besonders bevorzugt einen NCO-Gehalt größer als 5%, bevorzugt größer als 8%, besonders bevorzugt von 10 bis 40 % auf.

Dabei wird der NCO-Gehalt als Summe aus Isocyanat und Allophanat bestimmt. Dazu wird die Probe in Dimethylformamid, das Amin enthält, gelöst und 4 Std. bei 80°C gehalten. Der unreagierte Aminüberschuss wird mit Säure zurücktitriert. Dieses Verfahren ist dem Fachmann bekannt und beispielsweise in WO 2006/134138 A1 beschrieben.

Als Isocyanate in der erfindungsgemäßen Komponente C können allgemein bekannte Isocyanate vorliegen, beispielsweise aliphatische, cycloaliphatische und/oder aromatische Isocyanate, im Allgemeinen mit 2 Isocyanatgruppen. In Frage kommen auch Isocyanate höherer Funktionalität, z. B. Polymer-MDI oder modifizierte Isocyanate, beispielsweise Biuretgruppen enthaltene Isocyanate mit 2 bis 10 Isocyanatgruppen, Isocyanurate, die bevorzugt zwei bis acht, besonders bevorzugt drei Isocyanatgruppen aufweisen, und/oder Prepolymere mit 2 bis 10 Isocyanatgruppen, d.h. Isocyanate, die erhältlich sind nach Umsetzung von Isocyanaten mit gegenüber Isocyanaten reaktiven Verbindungen, im Allgemeinen Alkoholen.

In Betracht kommen somit beispielsweise Tri-, Tetra-, Penta-, Hexa-, Hepta- und/oder Oktamethylendüsocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexan-diisocyanat, 1-Methyl-2,4- und/oder -2,6-cyciohexan-diisocyanat und/oder 4,4'-, 2,4'- und 2,2'-Dicyc!ohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethan-diisocyanat und/oder Phenylendiisocyanat.

Bevorzugt eingesetzt werden MDI, ein Carbodiimid-modifiziertes 2,2'-, 2,4'- und/oder 4,4'-Diphenylmethandiisocyanat (MDI) und/oder ein Prepolymer auf der Basis von 2,2'-, 2,4'- und/oder 4,4'-Diphenylmethandiisocyanat (MDI), Triisocyanate oder Polyisocyanate, besonders Biurete oder Isocyanurate der genannten Isocyanate besonders ein Isocyanurat mit einem NCO-Gehalt von 20 bis 25% und einer Viskosität bei 23°C von 2500 bis 4000 mPas und/oder Mischungen von Diisocyanaten und Triisocyanaten, bevorzugt Mischungen (ii) enthaltend (iia) Verbindungen mit mindestens drei, bevorzugt drei Isocyanatgruppen auf der Basis von aliphatischen Isocyanaten, bevorzugt Hexamethylendiisocyanat (HDI) und/oder 1-Isocyanato-3,3,5-trimethyl-5-isocyanatomethyl-cyclohexan (Isophoron-diisocyanat, IPDI), besonders bevorzugt Hexamethylendiisocyanat (HDI) und (iib) Verbindungen mit zwei Isocyanatgruppen auf der Basis von aromatischen Isocyanaten, bevorzugt 2,2'-, 2,4'- und/oder 4,4'-Diphenylmethandiisocyanat (MDI), besonders bevorzugt 4,4'-Diphenylmethandiisocyanat einsetzt. Als (iia) setzt man bevorzugt ein Isocyanurat mit drei Isocyanatgruppen ein, bevorzugt ein Isocyanurat auf der Basis von HDI, d. h. ein trimerisiertes HDI, bei dem drei HDI eine Isocyanuratstruktur ausbilden und drei freie Isocyanatgruppen vorliegen. Besonders bevorzugt setzt man als (iia) ein Isocyanurat mit einem NCO-Gehalt von 20 bis 25 %, bevorzugt 21,5 bis 22,5% und einer Viskosität bei 23°C von 2500 bis 4000 mPas ein. Als (iib) setzt man bevorzugt 2,2'-, 2,4'- und/oder 4,4'-Diphenylmethandiisocyanat (MDI), ein Carbodiimid-modifiziertes MDI und/oder ein Prepolymer auf der Basis von MDI ein. Besonders bevorzugt ist als (iib) ein Prepolymer auf der Basis von 2,2'-, 2,4'- und/oder 4,4'- Diphenylmethandiisocyanat (MDI), Alkandiol, bevorzugt Dipropylenglykol, mit einem Molekulargewicht von 60 bis 400 g/mol und Polyetherdiol, bevorzugt Polypropylenglykolether, mit einem Molekulargewicht von 500 bis 4000 g/mol. Besonders bevorzugt ist ein Prepolymer als (iib) mit einer Viskosität bei 25°C von 500 bis 800 mPas, bevorzugt von 550 bis 770 mPas und einem NCO-Gehalt von 20 bis 25%, bevorzugt von 22,4 bis 23,4 %. Bevorzugt setzt man (iia) und (iib) in einem Gewichtsverhältnis von (iia) : (iib) von 1 : 1 und 1:10, bevorzugt von 1 : 3 und 1 : 4 ein.

Besonders bevorzugt sind als Isocyanat 2,2'-, 2,4'- und/oder 4,4'-Diphenylmethandiisocyanat (MDI), ein Carbodiimid-modifiziertes 2,2'-, 2,4'- und/oder 4,4'- Diphenylmethandiisocyanat (MDI), ein Prepolymer auf der Basis von 2,2'-, 2,4'- und/oder 4,4'- Diphenylmethandiisocyanat (MDI), bevorzugt ein Prepolymer mit einem NCO Gehalt von 20 bis 25 % und einer Viskosität bei 25°C von 500 bis 1000 mPas bestimmt nach DIN 53018, Biuret und/oder Isocyanuratgruppen aufweisende Isocyanate, besonders bevorzugt Isocyanurat mit einem NCO-Gehalt von 20 bis 25 % und einer Viskosität bei 23°C von 2500 bis 4000 mPas bestimmt nach DIN EN ISO 3219, insbesondere auf der Basis von Hexamethylendiisocyanat (HDI).

Insbesondere bevorzugt sind Carbodiimid-modifiziertes 4,4'-Diphenyl-methandiisocyanat (MDI), besonders bevorzugt mit einem Isocyanatgehalt von 25 bis 33 Gew.-%, insbesondere von 29,5 Gew.-%, beispielsweise Lupranat® MM 103 (BASF SE), Prepolymer auf Basis Ethylenoxid/Propylenoxid, bevorzugt mit einem Molekulargewicht zwischen 400 und 600 g/mol, insbesondere Mw = 450 g/mol, bevorzugt mit einem Isocyanatgehalt von 20 bis 28 Gew.-%, insbesondere 23 Gew.-%, beispielsweise Lupranat® MP 102 (BASF SE), und/oder ein trimerisiertes Hexamethylendiisocyanat bevorzugt mit einem Isocyanatgehalt von 20 bis 28 Gew.-%, insbesondere 23 Gew.-%, beispielsweise Basonat® HI 100 (BASF SE).

Zur Herstellung des als Komponente C verwendeten thermoplastischen Polyurethans enthaltend die Isocyanate können allgemein bekannte thermoplastische Polyurethane eingesetzt werden, z. B. solche auf der Basis aliphatischer oder aromatischer Ausgangssubstanzen.

Die thermoplastischen Polyurethane, in die die Isocyanate eingebracht werden und die anschließend Komponente C, thermoplastische Polyurethane enthaltend die Isocyanate, darstellen, können eine allgemein bekannte Härte aufweisen. Bevorzugt sind aber als Ausgangsmaterial zur Herstellung der Komponente C insbesondere thermoplastische Polyurethane mit einer Shore-Härte zwischen 80 A und 60 D, besonders bevorzugt zwischen 85 A und 95 A, insbesondere zwischen 90 A und 95 A. Thermoplastische Polyurethane in diesen bevorzugten Härtebereichen zur Herstellung der erfindungsgemäßen thermoplastischen Polyurethane enthaltend die Isocyanate sind hinsichtlich zweier Aspekte bevorzugt: Zum einen wird das Isocyanat überwiegend in der Weichphase gelöst, so dass das TPU möglichst weich sein sollte, um viel Isocyanat in dem TPU zu lösen. Zum anderen sollte das TPU nach der Einarbeitung eine ausreichende Rieselfähigkeit aufweisen. Dies wird dadurch erzielt, dass das TPU ausreichend hart ist, damit die Hartphase nach der Einarbeitung des Isocyanates hinreichend schnell kristallisieren kann.

Das als Komponente C eingesetzte thermoplastische Polyurethan enthaltend die Isocyanate kann bevorzugt in Form eines Granulates vorliegen, bevorzugt mit einem bevorzugt mittleren Teilchendurchmesser zwischen 0,05 mm und 10 mm, bevorzugt zwischen 1 mm und 5 mm.

Die Herstellung des in der erfindungsgemäßen Mischung als Komponente C vorliegenden thermoplastischen Polyurethans enthaltend Isocyanat kann nach allen dem Fachmann bekannten Verfahren erfolgen, beispielsweise, indem man thermoplastisches Polyurethan schmilzt und anschließend das Isocyanat bevorzugt homogen in die thermoplastische Polyurethanschmelze einarbeitet. Dabei soll die resultierende thermoplastische Polyurethanschmelze bevorzugt eine Temperatur von 120°C bis 160°C aufweisen. Besonders bevorzugt wird man das thermoplastische Polyurethan bei einer Temperatur von 170°C bis 280°C, bevorzugt von 170 bis 240°C schmelzen und anschließend in diese Schmelze das Isocyanat mit Temperaturen von 20 bis 80°C zumischen, so dass die resultierende Mischung eine Temperatur kleiner 160°C, bevorzugt von 120 bis 160°C aufweist. Eine derartige Verarbeitung bei einer Zieltemperatur kleiner 160°C bietet den Vorteil, dass bei dieser Temperatur ein Abbau des thermoplastischen Polyurethans durch die Zugabe von Diisocyanaten oder eine Vernetzung des thermoplastischen Polyurethans durch die Zuführung von Tri- oder Polyisocyanaten vermieden werden kann.

Bevorzugt kann man das Isocyanat mittels eines Extruders in das thermoplastische Polyurethan einarbeiten, bevorzugt mittels eines Zweiwellen-Extruders. Bevorzugt kann man das aus dem Extruder erhältliche Produkt, d. h. das thermoplastische Polyurethan enthaltend Isocyanat, entsprechend Komponente C, direkt nach dem Austreten aus der Düse des Extruders in einem Wasserbad abkühlen und den erhaltenen Strang anschließend beispielsweise durch allgemein bekannte Verfahren granulieren.

Bevorzugt kann man alternativ das aus dem Extruder erhältliche Produkt, d. h. die TPU Schmelze enthaltend das Isocyanat, durch eine Mehrlochdüse direkt vom Extruder in ein Wasserbad auspressen und anschließend mit einem rotierenden Messer zerteilen (Unterwassergranulierung). Dabei wird die TPU-Schmelze bevorzugt im Wasser bevorzugt durch eine Mehrlochdüse ausgepresst und mit einem rotierenden Messer bevorzugt im Wasser zerteilt.

Komponente C liegt in der erfindungsgemäßen Mischung im Allgemeinen in einer Menge von 0,1 bis 30 Gew.-%, bevorzugt in einer Menge von 1 bis 20 Gew.-%, besonders bevorzugt 1 bis 8 Gew.-% vor, jeweils bezogen auf die gesamte Mischung.

Gegebenenfalls kann die erfindungsgemäße Mischung neben den Komponenten A, B und C weitere Additive enthalten. Geeignete Additive sind dem Fachmann bekannt und beispielsweise ausgewählt aus dem Fachmann bekannten Hilfs- und/oder Zusatzstoffen, beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Verstärkungsmittel und Mischungen davon. Es ist auch möglich, dass weitere, von Polyurethanen verschiedene Homo- oder Copolymere zugegeben werden. Beispielsweise Polyoxymethylene, Polyolefine, Polyester, Polycarbonate, Polyesterol, AcrylnitrilButadien-Styrol-Copolymer (ABS), Acrylester-Styrol-Acrylnitril-Copolymer (ASA), Styrol-Acrylnitril-Copolymer (SAN), Polyamide oder Poly(meth)acrylate oder deren Mischungen.

In einer bevorzugten Ausführungsform liegt in der erfindungsgemäßen Mischung Komponente A in einer Menge von 29 bis 79 Gew.-%, Komponente B in einer Menge von 20 bis 70 Gew.-% und Komponente C in einer Menge von 1 bis 20 Gew.-% vor, wobei die Summe der Mengen der Komponenten A, B und C 100 Gew.-% ergibt.

In einer besonders bevorzugten Ausführungsform liegt in der erfindungsgemäßen Mischung Komponente A in einer Menge von 39 bis 69 Gew.-%, Komponente B in einer Menge von 30 bis 60 Gew.-% und Komponente C in einer Menge von 1 bis 8 Gew.-% vor, wobei die Summe der Mengen der Komponenten A, B und C 100 Gew.-% ergibt.

Liegen weitere Additive in der Mischung vor, ergibt die Summe aller Komponenten 100 Gew.-%.

Die vorliegende Erfindung betrifft auch ein Verfahren zur Herstellung eines flammgeschützten Polyurethans durch Mischen
(A) wenigstens eines Polyurethans als Komponente A,
(B) wenigstens eines Flammschutzmittels ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, Metallhydroxiden, organischen Phosphinat-Verbindungen, organischen Phosphat-Verbindungen, mehrwertigen Alkoholen, Melamin-Verbindungen, chloriertem Polyethylen und Mischungen davon, als Komponente B und
(C) wenigstens eines vernetzend wirkenden Reagenzes als Komponente C,
wobei das wenigstens eine vernetzend wirkende Reagenz wenigstens ein Isocyanat ist, das in wenigstens einem Polyurethan gelöst ist.

Gegebenenfalls kann auch wenigstens ein weiteres Additiv zugegeben werden. Bezüglich der Komponenten A, B und C und des optional vorliegenden wenigstens einen Additivs gilt das oben bezüglich der flammgeschützten Mischung Gesagte.

In einer bevorzugten Ausführungsform werden die Komponenten A, B, C und gegebenenfalls wenigstens ein Additiv gleichzeitig gemischt. Es ist allerdings auch jede andere Reihenfolge möglich.

Verfahren zum Mischen der genannten Komponenten sind dem Fachmann bekannt, beispielsweise Co-Extrusion, Compoundierung, beispielsweise beschrieben in DE 10343121 A1.

Die Herstellung des erfindungsgemäßen thermoplastischen Polyurethans enthaltend die Komponenten A,B und C kann beispielsweise derart erfolgen, dass man thermoplastisches Polyurethan (Komponente A) bei einer Temperatur von 170°C bis 280°C, bevorzugt 170 bis 240°C schmilzt und anschließend in die thermoplastische Polyurethanschmelze, die Komponenten B und C bevorzugt homogen einarbeitet.

Bevorzugt kann man die Komponente B und C mittels eines Extruders in das thermoplastische Polyurethan (Komponente A) einarbeiten, bevorzugt mittels eines Zweiwellenextruders.

Bevorzugt kann man das aus dem Extruder erhältliche Produkt, d.h. das thermoplastische Polyurethan enthaltend die Komponenten A, B und C, direkt nach dem Austreten aus der Düse des Extruders in einem Wasserbad abkühlen und den erhaltenen Strang anschließend beispielsweise durch allgemein bekannte Verfahren granulieren.

Bevorzugt kann man alternativ das aus dem Extruder erhältliche Produkt, d.h. die TPU Schmelze enthaltend die Komponenten A, B und C, durch eine Mehrlochdüse direkt vom Extruder in ein Wasserbad auspressen und anschließend mit einem rotierenden Messer zerteilen (Unterwassergranulierung). Dabei wird die TPU- Schmelze bevorzugt im Wasser bevorzugt durch eine Mehrlochdüse ausgepresst und mit einem rotierenden Messer bevorzugt im Wasser zerteilt.

Das flammgeschützte Polyurethan, welches durch das erfindungsgemäße Verfahren hergestellt wird, zeichnet sich durch besonders gute mechanische Eigenschaften, beispielsweise durch eine hohe Zugfestigkeit und Reißdehnung, aus. So kann die Zugfestigkeit gegenüber üblichen flammgeschützten Polyurethanen, bestehend aus den Komponenten A und B, um beispielsweise 10 bis 100 % erhöht werden.

Des Weiteren weist das durch das erfindungsgemäße Verfahren hergestellte, flammgeschützte Polyurethan ein besonders hohes Molekulargewicht, beispielsweise ein gewichtmittleres Molekulargewicht größer als 40000 g/mol, bevorzugt größer 60000 g/mol, auf.

Das erfindungsgemäß hergestellte, flammgeschützte Polyurethan zeigt des Weiteren einen besonders hohen Flammschutz, z.B. beim Vertikaltest UL 94V der Underwriters Laboratories eine Einstufung nach V2, V1 oder V0.

Somit zeichnet sich das erfindungsgemäß hergestellte, flammgeschützte Polyurethan dadurch aus, dass es neben einem hohen Flammschutz auch sehr gute mechanische Eigenschaften aufweist.

Daher betrifft die vorliegende Erfindung auch ein flammgeschütztes Polyurethan, herstellbar nach dem erfindungsgemäßen Verfahren.

Das erfindungsgemäße, flammgeschützte Polyurethan erhält seine besonderen Eigenschaften durch die Verwendung einer Lösung wenigstens eines Isocyanates in wenigstens einem Polyurethan (Komponente C) bei der Herstellung eines flammgeschützten Polyurethans.

Daher betrifft die vorliegende Erfindung auch die Verwendung einer Lösung wenigstens eines Isocyanates in wenigstens einem Polyurethan bei der Herstellung eines flammgeschützten Polyurethans.

Die vorliegende Erfindung betrifft auch die Verwendung einer Lösung wenigstens eines Isocyanates in wenigstens einem Polyurethan zur Erhöhung der mechanischen Stabilität von flammgeschützten Polyurethanen. Als Kennwerte für die mechanische Stabilität dienen dabei beispielsweise die Zugfestigkeit, Reissdehnung und der Abrieb.

Die vorliegende Erfindung betrifft auch die Verwendung einer erfindungsgemäßen Mischung zur Herstellung von Formkörpern, beispielsweise Rollen, Schuhsohlen, Verkleidungen in Automobilen, Schläuche, Beschichtungen, Kabel, Profile, Laminate, Fußböden für Gebäude und Transport, Steckverbindungen, Kabelstecker, Faltenbälge, Schleppkabel, Solarmodule, Wischerblätter, Kabelummantelungen, Dichtungen, Riemen oder Dämpfungselemente, Folien oder Fasern, durch Spritzguss, Kalandrieren, Pulversintern oder Extrusion. Verfahren zur Herstellung von Formkörpern durch Spritzguss oder Extrusion sind dem Fachmann allgemein bekannt. Die Verarbeitungstemperatur bei der Herstellung von Folien, Formkörpern oder Fasern beträgt dabei bevorzugt 150 bis 230°C, besonders bevorzugt 180 bis 220°C. Eine Verarbeitung der erfindungsgemäßen Mischung zu den gewünschten Folien, Formkörpern und/oder Fasern erfolgt bevorzugt direkt nach oder während dem Vermischen der Komponenten, da eine thermoplastische Verarbeitung der Polyisocyanat-Polyadditionsprodukte zu Folien, Formkörpern oder Fasern bevorzugt vor und/oder während der Ausbildung der Vernetzungen durchgeführt wird.

Die vorliegende Erfindung betrifft auch Formkörper, beispielsweise Rollen, Schuhsohlen, Verkleidungen in Automobilen, Schläuche, Kabelstecker, Faltenbälge, Schleppkabel, Wischerblätter, Kabelummantelungen, Dichtungen, Riemen oder Dämpfungselemente, Folien oder Fasern enthaltend eine erfindungsgemäße Mischung.

Die vorliegende Erfindung betrifft auch Formkörper, beispielsweise die oben Genannten, enthaltend ein erfindungsgemäß herstellbares flammgeschütztes Polyurethan.

Bezüglich der Lösung des wenigstens einen Isocyanates in wenigstens einem Polyurethan, der Polyurethane, Flammschutzmittel, der weiteren optionalen Additive, der Mengen und weiterer Details gilt das oben Gesagte.

### Beispiele

Konzentrat I und Konzentrat II sind vernetzend wirkende Reagenzien (Komponente C), die durch Lösen von jeweils einem isocyanathaltigen Prepolymer in einem Polyurethan hergestellt werden. Die genauen Zusammensetzungen sind der folgenden Tabelle zu entnehmen.

| | Konzentrat I | Konzentrat II |
|---|---|---|
| Basis TPU | Elastollan® C 85 A | Elastollan® C 85 A |
| Isocyanathaltiges Prepolymer | Prepolymer A | Prepolymer B |
| Gefundenes NCO (%) | 8 | 10 |

Prepolymer A ist ein Prepolymer aufgebaut aus MDI als Diisocyanat-Komponente, Dipropylenglykol und Ethylenoxid-Propylenoxid-Polyetherdiol der Molmasse 450 g/mol als Dihydroxy-Komponenten. Der NCO-Gehalt dieses Prepolymers beträgt 23 Gew.-%.

Prepolymer B ist ein Polymer aufgebaut aus 2,4'-MDI 2,0 % 4,4'-MDI 61 %, 3-Kern MDI 12 %, 4-Kern MDI 3%, höherkondensierten MDI 14 % als Dihydroxy-Komponenten, sowie einem Ethylenoxid-Propylenoxid-Polyetherdiol der Molmasse 450 g/mol als Dihydroxy-Komponente.

Die Herstellung von Konzentrat I und II erfolgte nach den in WO 2006/134138 beschriebenen Verfahren.

Elastollan® 1185 A ist ein Polyurethan, aufgebaut aus Polytetrahydrofuran und Butandiol als Diolkomponenten und MDI als Isocyanatkomponente und weist eine Härte von 85 Shore A auf. Melapur® ist ein Melamincyanurat. Fyrolflex RDP™ ist ein Phosphorsäureester (Resorcinol bis(diphenyl phosphat) und Magnifin® ist ein Magnesiumhydroxid (Mg(OH)₂).

Die mechanischen Eigenschaften werden nach dem Fachmann bekannten Verfahren bestimmt:
- Dichtebestimmung an TPU durch das Auftriebsverfahren gemäß DIN EN ISO 1183-1, A,
- Shore-Härteprüfung A gemäß DIN 53505,
- Zugversuch an TPU (Zugfestigkeit und Reißdehnung) gemäß DIN 53504,
- Weiterreißversuch an TPU (mit Einschnitt) gemäß DIN ISO 34-1, B (b),
- Abriebsbestimmung gemäß DIN ISO 4649

Die gewichtmittleren Molekulargewichte werden nach den in DE 10343121, Abschnitte 0010 und 0011, beschriebenen Verfahren bestimmt.

Die Mengen der einzelnen Komponenten werden im Folgenden in Gewichtsteilen angegeben. Dem Fachmann ist es aber bekannt, wie Gewichtsteile in Gewichtsprozent umgerechnet werden.

### Beispiel 1 (Vergleichsbeispiel)

Elastollan® 1185A der Firma Elastogran GmbH (67,5 Gewichtsteile, Komponente A), MELAPUR^{®} MC15 der Firma Ciba^{®}(25 Gewichtsteile, Komponente B) und Fyrolflex^{®} RDP (7,5 Gewichtsteile; Komponente B) der Firma Supresta werden mit einem Zweiwellenextruder gemischt. Die so erhaltene Mischung wird dann zu Bändchen (Dicke 2 mm) extrudiert.

### Beispiel 2

Elastollan® 1185A der Firma Elastogran GmbH (67,5 Gewichtsteile, Komponente A), Melapur^{®} MC15 der Firma Ciba^{®} (25 Gewichtsteile, Komponente B) und Fyrolflex^{®} RDP (7,5 Gewichtsteile; Komponente B) der Firma Supresta werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 3

Die Zusammensetzung der Bändchen, ausgewählte mechanischen Eigenschaften sowie eine Beurteilung der Flammwidrigkeit nach UL 94 V sind in der folgenden Tabelle dargestellt. Die Veränderung der mechanischen Eigenschaften durch den Zusatz der Komponente C betreffen die Zugfestigkeit, die Reißdehnung und die Spannungswerte bei verschiedenen Dehnungen. Durch den Zusatz der vernetzenden Komponente C werden höhere gewichtsmittlere Molekulargewichte erhalten.

| | | Beispiel 1 (Vergleichsbeispiel) | Beispiel 2 |
|---|---|---|---|
| Elastollan® 1185A (Komponente A) | Gewichtsteile | 67,5 | 67,5 |
| Melapur^{®} MC15 (Komponente B) | Gewichtsteile | 25 | 25 |
| Fyrolflex™ RDP (Komponente B) | Gewichtsteile | 7,5 | 7,5 |
| Konzentrat I (Komponente C) | Gewichtsteile | 0 | 2 |
| Zugfestigkeit | [MPa] | 35 | 40 |
| Reissdehnung | [%] | 590 | 530 |
| Spannungswert 100 % | [MPa] | 7,6 | 8,4 |
| Spannungswert 300 % | [MPa] | 9,6 | 11,4 |
| UL 94V (3 mm) | | V0 | V0 |
| Gewichtsmittleres Molekulargewicht | [g/mol] | 114000 | 149000 |

### Beispiel 4 (Vergleichsbeispiel)

Elastollan® 1185A der Firma Elastogran GmbH (60 Gewichtsteile, Komponente A) und MELAPUR^{®} MC15 der Firma Ciba^{®}(40 Gewichtsteile, Komponente B) werden mit einem Zweiwellenextruder gemischt. Die so erhaltene Mischung wird dann zu Bändchen (Dicke 2 mm) extrudiert.

### Beispiel 5

Elastollan® 1185A der Firma Elastogran GmbH (60 Gewichtsteile, Komponente A) und MELAPUR^{®} MC15 der Firma Ciba^{®} (40 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 6

Elastollan® 1185A der Firma Elastogran GmbH (60 Gewichtsteile, Komponente A) und MELAPUR^{®} MC15 der Firma Ciba^{®} (40 Gewichtsteile, Komponente B) werden mit einem Zweiwellenextruder gemischt. Die so erhaltene Mischung wird dann unter Zugabe von Konzentrat I der Firma Elastogran (6 Gewichtsteile, Komponente C) zu Bändchen (Dicke 2 mm) extrudiert.

### Beispiel 7

Die Zusammensetzung der Bändchen und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, die Weiterreißfestigkeit und die Spannungswerte bei verschiedenen Dehnungen. Durch den Zusatz der vernetzenden Komponente C werden höhere gewichtsmittlere Molekulargewichte erhalten.

| | | Beispiel 4 (Vergleichsbeispiel) | Beispiel 5 | Beispiel 6 |
|---|---|---|---|---|
| Elastollan® 1185A (Komponente A) | Gewichtsteile | 60 | 60 | 60 |
| Melapur^{®} MC15 (Komponente B) | Gewichtsteile | 40 | 40 | 40 |
| Konzentrat I (Komponente C) | Gewichtsteile | 0 | 2 | 6 |
| Zugfestigkeit | [MPa] | 15 | 19 | 25 |
| Reissdehnung | [%] | 470 | 410 | 380 |
| Weiterreissfestigkeit | N/mm | 80 | 66 | 55 |
| Spannungswert 100% | [MPa] | 10,5 | 11,5 | 14,2 |
| Spannungswert 300% | [MPa] | 11,9 | 14,6 | 18,3 |
| UL 94V (3 mm) | | V1 | V1 | V1 |
| Gewichtsmittleres Molekulargewicht | [g/mol] | 84000 | Nicht bestimmt | 257000 |

### Beispiel 8 (Vergleichsbeispiel)

Elastollan® 1185A der Firma Elastogran GmbH (60 Gewichtsteile, Komponente A) und Magnifin® H5 MV der Firma Albemarle Corporation (40 Gewichtsteile, Komponente B) werden mit einem Zweiwellenextruder gemischt. Die so erhaltene Mischung wird dann zu Bändchen (Dicke 2 mm) extrudiert.

### Beispiel 9

Elastollan® 1185A der Firma Elastogran GmbH (60 Gewichtsteile, Komponente A) und Magnifin® H5 MV der Firma Albemarle Coperation (40 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 10

Die Zusammensetzung der Bändchen und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, die Weiterreißfestigkeit und die Spannungswerte bei verschiedenen Dehnungen. Durch den Zusatz der vernetzenden Komponente C werden höhere gewichtsmittlere Molekulargewichte erhalten.

| | | Beispiel 8 (Vergleichsbeispiel) | Beispiel 9 |
|---|---|---|---|
| Elastollan® 1185A (Komponente A) | Gewichtsteile | 60 | 60 |
| Magnifin® H5 MV (Komponente B) | Gewichtsteile | 40 | 40 |
| Konzentrat I (Komponente C) | Gewichtsteile | 0 | 2 |
| Zugfestigkeit | [MPa] | 22 | 25 |
| Reissdehnung | [%] | 620 | 500 |
| Weiterreissfestigkeit | N/mm | 65 | 60 |
| Spannungswert 100% | [MPa] | 6,6 | 7,3 |
| Spannungswert 300% | [MPa] | 7,2 | 8,6 |
| Gewichtsmittleres Molekulargewicht | [g/mol] | 71000 | 96000 |

### Beispiel 11 (Vergleichsbeispiel)

Elastollan® 1185A der Firma Elastogran GmbH (50 Gewichtsteile, Komponente A) und Magnifin® H5 MV der Firma Albemarle Corporation (50 Gewichtsteile, Komponente B) werden mit einem Zweiwellenextruder gemischt. Die so erhaltene Mischung wird dann zu Bändchen (Dicke 2 mm) extrudiert.

### Beispiel 12

Elastollan® 1185A der Firma Elastogran GmbH (50 Gewichtsteile, Komponente A) und Magnifin® H5 MV der Firma Albemarle Corporation (50 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 13

Die Zusammensetzung der Bändchen und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, die Weiterreißfestigkeit und die Spannungswerte bei verschiedenen Dehnungen. Durch den Zusatz der vernetzenden Komponente C werden höhere gewichtsmittlere Molekulargewichte erhalten.

| | | Beispiel 11 (Vergleichsbeispiel) | Beispiel 12 |
|---|---|---|---|
| Elastollan® 1185A (Komponente A) | Gewichtsteile | 50 | 50 |
| Magnifin® H5 MV (Komponente B) | Gewichtsteile | 50 | 50 |
| Konzentrat I (Komponente C) | Gewichtsteile | 0 | 2 |
| Zugfestigkeit | [MPa] | 10 | 17 |
| Reissdehnung | [%] | 490 | 460 |
| Weiterreissfestigkeit | N/mm | 54 | 58 |
| Spannungswert 100 % | [MPa] | 5,9 | 7,0 |
| Spannungswert 300 % | [MPa] | 6,0 | 7,9 |
| Gewichtsmittleres Molekulargewicht | [g/mol] | 65000 | 92000 |

### Beispiel 14 (Vergleichsbeispiel)

Elastollan® 1185A der Firma Elastogran GmbH (40 Gewichtsteile, Komponente A) und Magnifin® H5 MV der Firma Albemarle Corporation (60 Gewichtsteile, Komponente B) werden mit einem Zweiwellenextruder gemischt. Die so erhaltene Mischung wird dann zu Bändchen (Dicke 2 mm) extrudiert.

### Beispiel 15

Elastollan® 1185A der Firma Elastogran GmbH (40 Gewichtsteile, Komponente A) und Magnifin® H5 MV der Firma Albemarle Corporation (60 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 16

Die Zusammensetzung der Bändchen und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, die Weiterreißfestigkeit und den Spannungswert bei 50% Dehnung. Durch den Zusatz der vernetzenden Komponente C werden höhere gewichtsmittlere Molekulargewichte erhalten.

| | | Beispiel 14 (Vergleichsbeispiel) | Beispiel 16 |
|---|---|---|---|
| Elastollan® 1185A (Komponente A) | Gewichtsteile | 40 | 40 |
| Magnifin® H5 MV (Komponente B) | Gewichtsteile | 60 | 60 |
| Konzentrat I (Komponente C) | Gewichtsteile | 0 | 2 |
| Zugfestigkeit | [MPa] | 6 | 7 |
| Reissdehnung | [%] | 80 | 360 |
| Weiterreissfestigkeit | N/mm | 42 | 47 |
| Spannungswert 50 % | [MPa] | 5,33 | 6,13 |
| Gewichtsmittleres Molekulargewicht | [g/mol] | 52000 | 79000 |

### Beispiel 17 (Vergleichsbeispiel)

Elastollan® 1185A der Firma Elastogran GmbH (67,5 Gewichtsteile, Komponente A), Melapur® MC15 der Firma Ciba^{®} (25 Gewichtsteile, Komponente B) und Fyrolflex™ RDP (7,5 Gewichtsteile; Komponente B) der Firma Supresta werden mit einem Zweiwellenextruder gemischt und dann zu Spritzplatten (Dicke 2 mm) verarbeitet.

### Beispiel 18

Elastollan® 1185A der Firma Elastogran GmbH (67,5 Gewichtsteile, Komponente A), Melapur^{®} MC15 der Firma Ciba^{®} (25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann unter Zugabe von Konzentrat I der Firma Elastogran (2 Gewichtsteile, Komponente C) zu Spritzplatten (Dicke 2 mm) verarbeitet.

### Beispiel 19

Elastollan® 1185A der Firma Elastogran GmbH (67,5 Gewichtsteile, Komponente A), Melapur^{®} MC15 der Firma Ciba^{®} (25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann unter Zugabe von Konzentrat I der Firma Elastogran (6 Gewichtsteile, Komponente C) zu Spritzplatten (Dicke 2 mm) verarbeitet.

### Beispiel 20

Die Zusammensetzung der Spritzplatten und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, den Abrieb und die Spannungswerte bei verschiedenen Dehnungen. Durch den Zusatz der vernetzenden Komponente C werden unlösliche Produkte erhalten.

| | | Bsp. 17 (Vergleichsbsp.) | Bsp. 18 | Bsp. 19 |
|---|---|---|---|---|
| Elastollan® 1185A (Komponente A) | Gewichtsteile | 67,5 | 67,5 | 67,5 |
| Melapur^{®} MC15 (Komponente B) | Gewichtsteile | 25 | 25 | 25 |
| Fyrolflex™ RDP (Komponente B) | Gewichtsteile | 7,5 | 7,5 | 7,5 |
| Konzentrat I (Komponente C) | Gewichtsteile | 0 | 2 | 6 |
| Dichte | [g/cm3] | 1,233 | 1,233 | 1,232 |
| Shore A | [A] | 91 | 91 | 91 |
| Zugfestigkeit | [MPa] | 22 | 26 | 30 |
| Reissdehnung | [%] | 320 | 460 | 390 |
| Abrieb | [mm3] | 41 | 32 | 33 |
| Spannungswert 100 % | [MPa] | 10,0 | 10,1 | 11,4 |
| Spannungswert 300 % | [MPa] | 12,9 | 13,7 | 17,3 |
| Gewichtsmittleres Molekulargewicht | [g/mol] | 113000 | Nicht bestimmt | unlöslich |

### Beispiel 21 (Vergleichsbeispiel)

Elastollan® 1185A der Firma Elastogran GmbH (60 Gewichtsteile, Komponente A) und Melapur^{®} MC15 der Firma Ciba^{®}(40 Gewichtsteile, Komponente B) werden mit einem Zweiwellenextruder gemischt und dann zu Spritzplatten (Dicke 2mm) verarbeitet.

### Beispiel 22

Elastollan® 1185A der Firma Elastogran GmbH (60 Gewichtsteile, Komponente A) und Melapur^{®} MC15 der Firma Ciba^{®} (40 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Spritzplatten (Dicke 2 mm) verarbeitet.

### Beispiel 23

Elastollan® 1185A der Firma Elastogran GmbH (60 Gewichtsteile, Komponente A) und Melapur^{®} MC15 der Firma Ciba^{®} (40 Gewichtsteile, Komponente B) werden mit einem Zweiwellenextruder gemischt. Die so erhaltene Mischung wird dann unter Zugabe von Konzentrat I der Firma Elastogran (6 Gewichtsteile, Komponente C) zu Spritzplatten (Dicke 2 mm) verarbeitet.

### Beispiel 24

Die Zusammensetzung der Spritzplatten und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, den Abrieb, die Weiterreißfestigkeit und die Spannungswerte bei verschiedenen Dehnungen. Durch den Zusatz der vernetzenden Komponente C werden unlösliche Produkte erhalten.

| | | Bsp. 21 (Vergleichsbsp.) | Bsp. 22 | Bsp. 23 |
|---|---|---|---|---|
| Elastollan® 1185A (Komponente A) | Gewichtsteile | 60 | 60 | 60 |
| Melapur^{®} MC15 (Komponente B) | Gewichtsteile | 40 | 40 | 40 |
| Konzentrat I (Komponente C) | Gewichtsteile | 0 | 2 | 6 |
| Shore A | [A] | 94 | 94 | 94 |
| Zugfestigkeit | [MPa] | 14 | 18 | 23 |
| Reissdehnung | [%] | 490 | 480 | 360 |
| Weiterreissfestigkeit | [N/mm] | 74 | 76 | 62 |
| Abrieb | [mm3] | 55 | 37 | 38 |
| Spannungswert 100% | [MPa] | 9,8 | 10,7 | 13,1 |
| Spannungswert 300% | [MPa] | 10,7 | 12,4 | 17,7 |
| Gewichtsmittleres Molekulargewicht | [g/mol] | 82000 | Nicht bestimmt | unlöslich |

### Beispiel 25 (Vergleichsbeispiel)

Elastollan® 1185A der Firma Elastogran GmbH (60 Gewichtsteile, Komponente A) und Magnifin® H5 MV der Firma Albemarle Corporation (40 Gewichtsteile, Komponente B) werden mit einem Zweiwellenextruder gemischt. Die so erhaltene Mischung wird dann zu Spritzplatten (Dicke 2 mm) verarbeitet.

### Beispiel 26

Elastollan® 1185A der Firma Elastogran GmbH (60 Gewichtsteile, Komponente A) und Magnifin® H5 MV der Firma Albemarle Corporation (40 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Spritzplatten (Dicke 2 mm) verarbeitet.

### Beispiel 27

Elastollan® 1185A der Firma Elastogran GmbH (60 Gewichtsteile, Komponente A) und Magnifin® H5 MV der Firma Albemarle Corporation (40 Gewichtsteile, Komponente B) werden mit einem Zweiwellenextruder gemischt. Die so erhaltene Mischung wird dann unter Zugabe von Konzentrat I der Firma Elastogran (6 Gewichtsteile, Komponente C) zu Spritzplatten (Dicke 2 mm) verarbeitet.

### Beispiel 28

Die Zusammensetzung der Spritzplatten und ausgewählte mechanischen Eigenschaften sind in der folgenden Tabelle dargestellt. Die Veränderung der mechanischen Eigenschaften durch den Zusatz der Komponente C betreffen die Härte, die Zugfestigkeit, die Reißdehnung, die Weiterreißfestigkeit, den Abrieb und die Spannungswerte bei verschiedenen Dehnungen. Durch den Zusatz der vernetzenden Komponente C werden höhere gewichtsmittlere Molekulargewichte erhalten.

| | | Beispiel 25 (Vergleichsbeispiel) | Beispiel 26 | Beispiel 27 |
|---|---|---|---|---|
| Elastollan® 1185A (Komponente A) | Gewichtsteile | 60 | 60 | 60 |
| Magnifin® H5 MV (Komponente B) | Gewichtsteile | 40 | 40 | 40 |
| Konzentrat I (Komponente C) | Gewichtsteile | 0 | 2 | 6 |
| Shore D | [D] | 42 | 44 | 48 |
| Zugfestigkeit | [MPa] | 15 | 23 | 22 |
| Reissdehnung | [%] | 650 | 590 | 350 |
| Weiterreissfestigkeit | [N/mm] | 58 | 63 | 60 |
| Abrieb | [mm3] | 179 | 137 | 88 |
| Spannungswert 100 % | [MPa] | 6,8 | 7,5 | 10,3 |
| Spannungswert 300 % | [MPa] | 6,9 | 8,1 | 13,9 |
| Gewichtsmittleres Molekulargewicht | [g/mol] | 57000 | Nicht bestimmt | 173000 |

### Beispiel 29 (Vergleichsbeispiel)

Elastollan® 1185A der Firma Elastogran GmbH (50 Gewichtsteile, Komponente A) und Magnifin® H5 MV der Firma Albemarle Corporation (50 Gewichtsteile, Komponente B) werden mit einem Zweiwellenextruder gemischt. Die so erhaltene Mischung wird dann zu Spritzplatten (Dicke 2 mm) verarbeitet.

### Beispiel 30

Elastollan® 1185A der Firma Elastogran GmbH (50 Gewichtsteile, Komponente A) und Magnifin® H5 MV der Firma Albemarle Corporation (50 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Spritzplatten (Dicke 2 mm) verarbeitet.

### Beispiel 31

Elastollan® 1185A der Firma Elastogran GmbH (50 Gewichtsteile, Komponente A) und Magnifin® H5 MV der Firma Albemarle Corporation (50 Gewichtsteile, Komponente B) werden mit einem Zweiwellenextruder gemischt. Die so erhaltene Mischung wird dann unter Zugabe von Konzentrat I der Firma Elastogran (6 Gewichtsteile, Komponente C) zu Spritzplatten (Dicke 2 mm) verarbeitet.

### Beispiel 32

Die Zusammensetzung der Spritzplatten und ausgewählte mechanischen Eigenschaften sind in der folgenden Tabelle dargestellt. Die Veränderung der mechanischen Eigenschaften durch den Zusatz der Komponente C betreffen die Härte, die Zugfestigkeit, die Reißdehnung, die Weiterreißfestigkeit, den Abrieb und die Spannungswerte bei verschiedenen Dehnungen. Durch den Zusatz der vernetzenden Komponente C werden höhere gewichtsmittlere Molekulargewichte erhalten.

| | | Beispiel 29 (Vergleichsbeispiel) | Beispiel 30 | Beispiel 31 |
|---|---|---|---|---|
| Elastollan® 1185A (Komponente A) | Gewichtsteile | 50 | 50 | 50 |
| Magnifin® H5 MV (Komponente B) | Gewichtsteile | 50 | 50 | 50 |
| Konzentrat I (Komponente C) | Gewichtsteile | 0 | 2 | 6 |
| Shore A | [A] | 93 | 94 | 93 |
| Zugfestigkeit | [MPa] | 9 | 16 | 16 |
| Reissdehnung | [%] | 540 | 440 | 360 |
| Weiterreissfestigkeit | [N/mm] | 51 | 59 | 57 |
| Abrieb | [mm3] | 253 | 163 | 118 |
| Spannungswert 100 % | [MPa] | 6,4 | 8,3 | 9,8 |
| Spannungswert 300 % | [MPa] | 6,3 | 9,2 | 11,6 |
| Gewichtsmittleres Molekulargewicht | [g/mol] | 50000 | Nicht bestimmt | 145000 |

### Beispiel 33 (Vergleichsbeispiel)

Elastollan® 1185A der Firma Elastogran GmbH (40 Gewichtsteile, Komponente A) und Magnifin® H5 MV der Firma Albemarle Corporation (60 Gewichtsteile, Komponente B) werden mit einem Zweiwellenextruder gemischt. Die so erhaltene Mischung wird dann zu Spritzplatten (Dicke 2 mm) verarbeitet.

### Beispiel 34

Elastollan® 1185A der Firma Elastogran GmbH (40 Gewichtsteile, Komponente A) und Magnifin® H5 MV der Firma Albemarle Corporation (60 Gewichtsteile, Komponente B) werden mit einem Zweiwellenextruder gemischt. Die so erhaltene Mischung wird dann unter Zugabe von Konzentrat I der Firma Elastogran (2 Gewichtsteile, Komponente C) zu Spritzplatten (Dicke 2 mm) verarbeitet.

### Beispiel 35

Elastollan® 1185A der Firma Elastogran GmbH (40 Gewichtsteile, Komponente A) und Magnifin® H5 MV der Firma Albemarle Corporation (60 Gewichtsteile, Komponente B) werden mit einem Zweiwellenextruder gemischt. Die so erhaltene Mischung wird dann unter Zugabe von Konzentrat I der Firma Elastogran (6 Gewichtsteile, Komponente C) zu Spritzplatten (Dicke 2 mm) verarbeitet.

### Beispiel 36

Die Zusammensetzung der Bändchen und ausgewählte mechanischen Eigenschaften sind in der folgenden Tabelle dargestellt. Die Veränderung der mechanischen Eigenschaften durch den Zusatz der Komponente C betreffen die Zugfestigkeit, die Reißdehnung, die Weiterreißfestigkeit und den Abrieb.

| | | Beispiel 34 (Vergleichsbeispiel) | Beispiel 35 | Beispiel 36 |
|---|---|---|---|---|
| Elastollan® 1185A (Komponente A) | Gewichtsteile | 40 | 40 | 40 |
| Magnifin® H5 MV (Komponente B) | Gewichtsteile | 60 | 60 | 60 |
| Konzentrat I (Komponente C) | Gewichtsteile | 0 | 2 | 6 |
| Shore A | [A] | 95 | 96 | 95 |
| Zugfestigkeit | [MPa] | 6 | 9 | 10 |
| Reissdehnung | [%] | 40 | 300 | 270 |
| Weiterreissfestigkeit | [N/mm] | 31 | 53 | 53 |
| Abrieb | [mm3] | 482 | 179 | 167 |

### Beispiel 38 (Vergleichsbeispiel)

Elastollan® 1154D der Firma Elastogran GmbH (67,5 Gewichtsteile, Komponente A), MELAPUR® MC15 der Firma Ciba^{®}(25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann zu Bändchen (Dicke 2 mm) extrudiert.

### Beispiel 39

Elastollan® 1154D der Firma Elastogran GmbH (67,5 Gewichtsteile, Komponente A), Melapur^{®} MC15 der Firma Ciba^{®} (25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann unter Zugabe von Konzentrat I der Firma Elastogran (2 Gewichtsteile, Komponente C) zu Bändchen (Dicke 2 mm) extrudiert.

### Beispiel 40

Die Zusammensetzung der Bändchen, ausgewählte mechanischen Eigenschaften sowie eine Beurteilung der Flammwidrigkeit nach UL 94 V sind in der folgenden Tabelle dargestellt. Die Veränderung der mechanischen Eigenschaften durch den Zusatz der Komponente C betreffen die Zugfestigkeit, die Reißdehnung und die Spannungswerte bei verschiedenen Dehnungen.

| | | Beispiel 38 (Vergleichsbeispiel) | Beispiel 39 |
|---|---|---|---|
| Elastollan® 1154D (Komponente A) | Gewichtsteile | 67,5 | 67,5 |
| Melapur^{®} MC15 (Komponente B) | Gewichtsteile | 25 | 25 |
| Fyrolflex™ RDP (Komponente B) | Gewichtsteile | 7,5 | 7,5 |
| Konzentrat I (Komponente C) | Gewichtsteile | 0 | 2 |
| Zugfestigkeit | [MPa] | 30 | 36 |
| Reissdehnung | [%] | 400 | 330 |
| Spannungswert 100 % | [MPa] | 18 | 19 |
| Spannungswert 300 % | [MPa] | 30 | 32 |
| UL 94V (2,0 mm) | | V2 | V2 |

### Beispiel 41 (Vergleichsbeispiel)

Elastollan® 1185A der Firma Elastogran GmbH (67,5 Gewichtsteile, Komponente A), MELAPUR^{®} MC15 der Firma Ciba^{®}(25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann zu Bändchen (Dicke 2 mm) extrudiert.

### Beispiel 42

Elastollan® 1185A der Firma Elastogran GmbH (67,5 Gewichtsteile, Komponente A), Melapur^{®} MC15 der Firma Ciba^{®} (25 Gewichtsteile, Komponente B) und Fyrolflex™ RDP (7,5 Gewichtsteile; Komponente B) der Firma Supresta werden mit einem Zweiwellenextruder gemischt. Die so erhaltene Mischung wird dann unter Zugabe von Konzentrat II der Firma Elastogran (2 Gewichtsteile, Komponente C) zu Bändchen (Dicke 2 mm) extrudiert.

### Beispiel 43

Die Zusammensetzung der Bändchen, ausgewählte mechanischen Eigenschaften sowie eine Beurteilung der Flammwidrigkeit nach UL 94 V sind in der folgenden Tabelle dargestellt. Die Veränderung der mechanischen Eigenschaften durch den Zusatz der Komponente C betreffen die Zugfestigkeit, die Reißdehnung und die Spannungswerte bei verschiedenen Dehnungen.

| | | Beispiel 41 (Vergleichsbeispiel) | Beispiel 42 |
|---|---|---|---|
| Elastollan® 1185A (Komponente A) | Gewichtsteile | 67,5 | 67,5 |
| Melapur^{®} MC15 (Komponente B) | Gewichtsteile | 25 | 25 |
| Fyrolflex™ RDP (Komponente B) | Gewichtsteile | 7,5 | 7,5 |
| Konzentrat II (Komponente C) | Gewichtsteile | 0 | 2 |
| Zugfestigkeit | [MPa] | 35 | 40 |
| Reissdehnung | [%] | 590 | 530 |
| Spannungswert 100 % | [MPa] | 7,2 | 9,1 |
| Spannungswert 300 % | [MPa] | 9,2 | 12,4 |
| UL 94V (3 mm) | | V0 | V0 |

### Beispiel 44

Elastollan® 1185A der Firma Elastogran GmbH (40 Gewichtsteile, Komponente A), Magnifin® H5 MV der Firma Albemarle Corporation (60 Gewichtsteile, Komponente B) und Konzentrat I der Firma Elastogran (6 Gewichtsteile, Komponente C) werden mit einem Zweiwellenextruder gemischt. Die Mischung enthaltend Komponente C besitzt ein höheres Molekulargewicht (niedrigerer MFR).

| | | | |
|---|---|---|---|
| Elastollan® 1185A (Komponente A) | Gewichtsteile | 40 | 40 |
| Magnifin® H5 MV (Komponente B) | Gewichtsteile | 60 | 60 |
| Konzentrat I (Komponente C) | Gewichtsteile | 0 | 4 |
| MFR des Granulats (200°C/21,6kg) | | 151 | 60 |

### Beispiel 45

Für die nach Beispiel 1 (Vergleichsbeispiel) und 2 erhaltenen Spritzplatten werden die Temperatur-Zeit-Grenzen bei lang anhaltender Wärmeeinwirkung nach DIN EN ISO 2578 (Medium Luft, Lagerung in Öfen mit natürlicher Konvektion) bestimmt. Der Grenzwert wird jeweils bei 50% der Ausgangsreißdehnung nach Zugversuch DIN 53504-S2 ermittelt. Durch den Zusatz der vernetzenden Komponente C wird ein höherer Temperaturindex erreicht.

| | Ausgangsreißdehnung [%] | Temperaturindex TI für 20000 h [°C] | Halbwert-Intervall HIC [°C] |
|---|---|---|---|
| Beispiel 1 (Vergleichsbeispiel) | 590 | 97,1 | 9,3 |
| Beispiel 2 | 530 | 102,0 | 8,7 |

### Beispiel 46

Für die nach Beispiel 21 (Vergleichsbeispiel) und 22 erhaltenen Spritzplatten werden die Temperatur-Zeit-Grenzen bei lang anhaltender Wärmeeinwirkung nach DIN EN ISO 2578 (Medium Luft, Lagerung in Öfen mit natürlicher Konvektion) bestimmt. Der Grenzwert wird jeweils bei 50% der Ausgangsreißdehnung nach Zugversuch DIN 53504-S2 ermittelt. Durch den Zusatz der vernetzenden Komponente C wird ein höherer Temperaturindex erreicht.

| | Ausgangsreißdehnung [%] | Temperaturindex TI für 20000 h [°C] | Halbwert-Intervall HIC [°C] |
|---|---|---|---|
| Beispiel 21 (Vergleichsbeispiel) | 490 | 82,8 | 8,0 |
| Beispiel 22 | 480 | 101,1 | 6,3 |

## Patentansprüche

1. Flammgeschützte Mischung enthaltend
(A) wenigstens ein Polyurethan als Komponente A,
(B) wenigstens ein Flammschutzmittel ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, Metallhydroxiden, organischen Phosphinat-Verbindungen, organischen Phosphat-Verbindungen, mehrwertigen Alkoholen, Melamin-Verbindungen, chloriertem Polyethylen und Mischungen davon, als Komponente B und
(C) wenigstens ein vernetzend wirkendes Reagenz als Komponente C,
**dadurch gekennzeichnet, dass** das wenigstens eine vernetzend wirkende Reagenz wenigstens ein Isocyanat ist, das in wenigstens einem Polyurethan gelöst ist.

2. Mischung nach Anspruch 1, **dadurch gekennzeichnet, dass** das Flammschutzmittel ausgewählt ist aus der Gruppe bestehend aus Melamin- und Phosphor-Verbindungen, Metallhydroxiden, und Mischungen davon.

3. Mischung nach Anspruch 1 oder 2, **dadurch gekennzeichnet, dass** Komponente A in einer Menge von 29 bis 79 Gew.-%, Komponente B in einer Menge von 20 bis 70 Gew.-% und Komponente C in einer Menge von 1 bis 20 Gew.-% vorliegen, wobei die Summe der Mengen der Komponenten A, B und C 100 Gew.-% ergibt.

4. Verfahren zur Herstellung eines flammgeschützten Polyurethans durch Mischen
(A) wenigstens eines Polyurethans als Komponente A,
(B) wenigstens eines Flammschutzmittels ausgewählt aus der Gruppe bestehend aus Talg, Ammoniumphosphat, Ammoniumpolyphosphat, Calciumcarbonat, Antimonoxid, Zinkborat, Ton, Montmorillonit-Ton, Metalloxiden, Metallhydroxiden, organischen Phosphinat-Verbindungen, organischen Phosphat-Verbindungen, mehrwertigen Alkoholen, Melamin-Verbindungen, chloriertem Polyethylen und Mischungen davon, als Komponente B und
(C) wenigstens eines vernetzend wirkenden Reagenzes als Komponente C,
**dadurch gekennzeichnet, dass** das wenigstens eine vernetzend wirkende Reagenz wenigstens ein Isocyanat ist, das in wenigstens einem Polyurethan gelöst ist.

5. Verfahren nach Anspruch 4 **dadurch gekennzeichnet, dass** die Komponenten A, B und C gleichzeitig gemischt werden.

6. Flammgeschütztes Polyurethan, herstellbar nach einem Verfahren nach Anspruch 4 oder 5.

7. Verwendung einer Lösung wenigstens eines Isocyanates in wenigstens einem Polyurethan bei der Herstellung eines flammgeschützten Polyurethans.

8. Verwendung einer Lösung wenigstens eines Isocyanates in wenigstens einem Polyurethan zur Erhöhung der mechanischen Stabilität von flammgeschützten Polyurethanen.

9. Verwendung einer Mischung gemäß einem der Ansprüche 1 bis 3 zur Herstellung von Formkörpern durch Spritzguss, Kalandrieren, Pulversintern oder Extrusion.

10. Formkörper, enthaltend eine Mischung nach einem der Ansprüche 1 bis 3.

11. Formkörper, enthaltend ein flammgeschütztes Polyurethan nach Anspruch 6.

## Claims

1. A flame-retardant mixture comprising
(A) at least one polyurethane as component A,
(B) at least one flame retardant selected from the group consisting of tallow, ammonium phosphate, ammonium polyphosphate, calcium carbonate, antimony oxide, zinc borate, clay, montmorillonite clay, metal oxides, metal hydroxides, organic phosphinate compounds, organic phosphate compounds, polyhydric alcohols, melamine compounds, chlorinated polyethylene, and mixtures thereof, as component B, and
(C) at least one crosslinking reagent as component C,
wherein the at least one crosslinking reagent is at least one isocyanate dissolved in at least one polyurethane.

2. The mixture according to claim 1, wherein the flame retardant has been selected from the group consisting of melamine compounds and phosphorus compounds, metal hydroxides, and mixtures thereof.

3. The mixture according to claim 1 or 2, wherein the amount present of component A is from 29 to 79% by weight, the amount present of component B is from 20 to 70% by weight, and the amount present of component C is from 1 to 20% by weight, where the total of the amounts of the components A, B and C is 100% by weight.

4. A process for the production of a flame-retardant polyurethane by mixing of
(A) at least one polyurethane as component A,
(B) at least one flame retardant selected from the group consisting of tallow, ammonium phosphate, ammonium polyphosphate, calcium carbonate, antimony oxide, zinc borate, clay, montmorillonite clay, metal oxides, metal hydroxides, organic phosphinate compounds, organic phosphate compounds, polyhydric alcohols, melamine compounds, chlorinated polyethylene, and mixtures thereof, as component B, and
(C) at least one crosslinking reagent as component C,
wherein the at least one crosslinking reagent is at least one isocyanate dissolved in at least one polyurethane.

5. The process according to claim 4, wherein components A, B, and C are mixed simultaneously.

6. A flame-retardant polyurethane that can be produced by a process according to claim 4 or 5.

7. The use of a solution of at least one isocyanate in at least one polyurethane in the production of a flame-retardant polyurethane.

8. The use of a solution of at least one isocyanate in at least one polyurethane for increasing the mechanical stability of flame-retardant polyurethanes.

9. The use of a mixture according to any of claims 1 to 3 for the production of moldings by injection molding, calendering, powder-sintering or extrusion.

10. A molding, comprising a mixture according to any of claims 1 to 3.

11. A molding, comprising a flame-retardant polyurethane according to claim 6.

## Revendications

1. Mélange ignifugé, contenant
(A) au moins un polyuréthane en tant que composant A,
(B) au moins un agent ignifuge choisi dans le groupe constitué par le suif, le phosphate d'ammonium, le polyphosphate d'ammonium, le carbonate de calcium, l'oxyde d'antimoine, le borate de zinc, l'argile, l'argile-montmorillonite, des oxydes métalliques, des hydroxydes métalliques, des composés phosphinate organiques, des composés phosphate organiques, des alcools polyhydriques, des composés mélamine, le polyéthylène chloré et des mélanges de ceux-ci, en tant que composant B et
(C) au moins un réactif à action réticulante en tant que composant C,
**caractérisé en ce que** ledit au moins un réactif à action réticulante est au moins un isocyanate, qui est dissous dans au moins un polyuréthane.

2. Mélange selon la revendication 1, **caractérisé en ce que** l'agent ignifuge est choisi dans le groupe constitué par des composés phosphorés et mélamine, des hydroxydes de métaux, et des mélanges de ceux-ci.

3. Mélange selon la revendication 1 ou 2, **caractérisé en ce que** sont présents le composant A en une quantité de 29 à 79 % en poids, le composant B en une quantité de 20 à 70 % en poids et le composant C en une quantité de 1 à 20 % en poids, la somme des composants A, B et C étant égale à 100 % en poids.

4. Procédé pour la préparation d'un polyuréthane ignifugé, par mélange
(A) d'au moins un polyuréthane en tant que composant A,
(B) d'au moins un agent ignifuge choisi dans le groupe constitué par le suif, le phosphate d'ammonium, le polyphosphate d'ammonium, le carbonate de calcium, l'oxyde d'antimoine, le borate de zinc, l'argile, l'argile-montmorillonite, des oxydes métalliques, des hydroxydes métalliques, des composés phosphinate organiques, des composés phosphate organiques, des alcools polyhydriques, des composés mélamine, le polyéthylène chloré et des mélanges de ceux-ci, en tant que composant B et
(C) d'au moins un réactif à action réticulante en tant que composant C,
**caractérisé en ce que** ledit au moins un réactif à action réticulante est au moins un isocyanate, qui est dissous dans au moins un polyuréthane.

5. Procédé selon la revendication 4, **caractérisé en ce qu'**on mélange sumultanément les composants A, B et C.

6. Polyuréthane ignifugé, pouvant être préparé conformément à un procédé selon la revendication 4 ou 5.

7. Utilisation d'une solution d'au moins un isocyanate dans au moins un polyuréthane, dans la préparation d'un polyuréthane ignifugé.

8. Utilisation d'une solution d'au moins un isocyanate dans au moins un polyuréthane, pour augmenter la stabilité mécanique de polyuréthanes ignifugés.

9. Utilisation d'un mélange selon l'une quelconque des revendications 1 à 3, pour la production de corps moulés par moulage par injection, calandrage, frittage de poudre ou extrusion.

10. Corps moulé, contenant un mélange selon l'une quelconque des revendications 1 à 3.

11. Corps moulé, contenant un polyuréthane ignifugé selon la revendication 6.
